# FASCICULE DE BREVET EUROPEEN

(11) **EP 0 702 636 B1**
(45) Date de publication et mention de la délivrance du brevet: **27.12.1996**
(21) Numéro de dépôt: 94916262.2
(22) Date de dépôt: 06.05.1994
(51) Int. Cl.: B60T 13/569

(54) **SERVOMOTEUR PNEUMATIQUE**
PNEUMATISCHER SERVOMOTOR
PNEUMATIC BRAKE SERVO

(30) Priorité: 14.06.1993 FR 9307121
(43) Date de publication de la demande: 27.03.1996
(73) Titulaire: ALLIEDSIGNAL EUROPE SERVICES TECHNIQUES, 93700 Drancy (FR)
(72) Inventeur: GAUTIER, Jean, Pierre, F-93600 Aulnay-sous-Bois (FR); VERBO, Ulysse, F-93600 Aulnay-sous-Bois (FR); PEREZ REVILLA, Miguel, F-95100 Argenteuil (FR)
(86) Numéro de dépôt international: FR9400536
(87) Numéro de publication internationale: WO9429152

(56) Documents cités:
- EP-A- 0 035 370
- DE-A- 3 039 725
- GB-A- 2 066 395

## Description

La présente invention concerne les servomoteurs pneumatiques, et plus particulièrement du type de ceux qui sont utilisés pour fournir une assistance au freinage des véhicules automobiles.

Des servomoteurs de ce type (EP-A-0 035 370) comprennent de façon classique une enveloppe à l'intérieur de laquelle se trouve un piston comportant un moyeu prolongé vers l'arrière par une partie tubulaire traversant de façon étanche l'enveloppe, et supportant une jupe et qui, à l'aide d'une membrane déroulante, définit une chambre avant reliée en permanence à une source de dépression et une chambre arrière reliée sélectivement à la chambre avant ou à l'atmosphère par un moyen de valve actionné par une tige de commande susceptible de s'appuyer, par l'intermédiaire de la face avant d'un plongeur, sur une première face d'un disque de réaction solidaire par une deuxième face d'une tige de poussée.

Dans de tels servomoteurs pneumatiques, le moyeu de piston est constitué d'une pièce massive monobloc dans laquelle la partie tubulaire s'étendant vers l'arrière, à l'extérieur du boîtier, est prolongée, vers l'avant, par un évasement sur la périphérie duquel sont montées la jupe et la membrane et dans lequel sont disposés le plongeur et le disque de réaction, dans un agencement délicat à réaliser, compte tenu en particulier des canaux de communication et de la qualité de surface requise pour la partie tubulaire arrière, et présentant un poids global important.

La présente invention a pour objet de proposer un servomoteur pneumatique du type défini généralement plus haut, de conception allégée, robuste, de faible coût de fabrication et permettant par simple interchangeabilité de composants de sous-ensembles diverses adaptations convenant à différents véhicules pourvus de tels servomoteurs d'assistance au freinage.

Pour ce faire, selon une caractéristique de l'invention, la partie tubulaire arrière du piston est rapportée sur le moyeu de piston par encliquetage.

De façon avantageuse, on peut prévoir que le moyeu de piston comporte une gorge annulaire pour recevoir un bourrelet périphérique intérieur de la membrane déroulante , le bourrelet venant en appui sur l'extrémité avant de la partie tubulaire arrière.

Grâce à une telle conception, il est possible de prévoir que la partie tubulaire arrière du piston et le moyeu de piston soient constitués de matériaux différents.

De plus, avec un tel agencement, la partie de corps du moyeu est réduite à un noyau de faibles dimensions et de faible poids de forme compacte ne présentant pas de problèmes de fabrication, l'assemblage des composants du piston pouvant s'effectuer aisément de manière automatisée et autorisant de nombreuses adaptations ponctuelles.

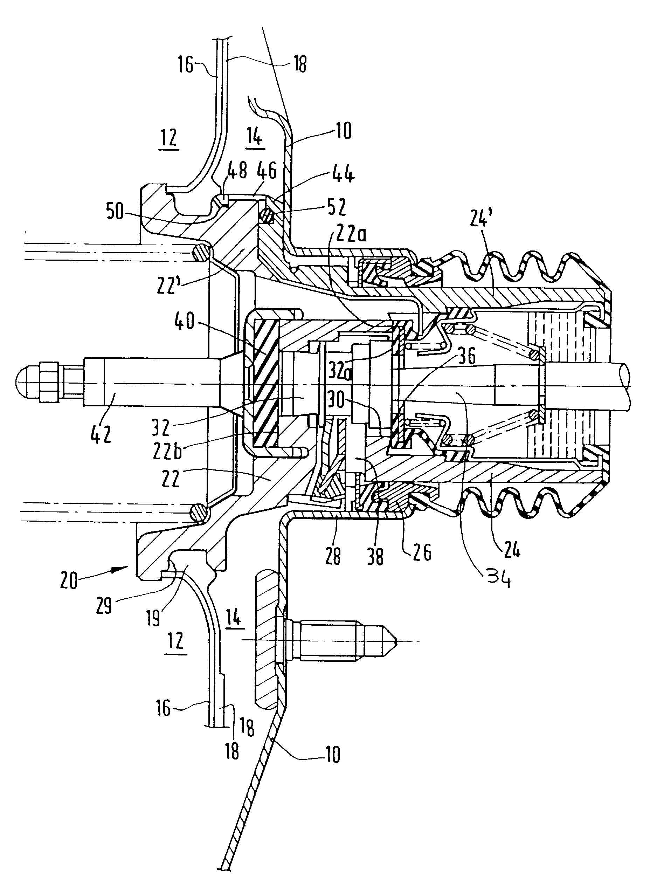

D'autres caractéristiques et avantages de la présente invention ressortiront de la description suivante d'un mode réalisation, donné à titre illustratif mais nullement limitatif, faite en relation avec le dessin annexé, sur lequel :
La Figure unique est une vue en coupe longitudinale partielle d'un servomoteur pneumatique d'assistance au freinage. La moitié inférieure de la Figure représente un servomoteur pneumatique conventionnel, et la moitié supérieure représente un servomoteur pneumatique réalisé conformément à la présente invention.

Par convention, on appelle "arrière" du servomoteur la partie de celui-ci située du côté de la pédale de frein et "avant" la partie située du côté du maître-cylindre. Sur la Figure, l'avant se trouve ainsi à gauche et l'arrière à droite.

Sur la moitié inférieure de la Figure unique on a représenté la partie centrale arrière d'un servomoteur pneumatique d'assistance au freinage du type à dépression comprenant une enveloppe dont on reconnaît la partie centrale du couvercle arrière 10, divisée intérieurement en une chambre avant, ou chambre à dépression 12, et une chambre arrière, ou chambre de travail 14, par une structure de paroi mobile constituée d'une jupe 16, et d'une membrane souple 18 dont le bord périphérique extérieur (non représenté) est fixé de façon étanche entre les deux coquilles du boîtier.

La jupe 16 est supportée par un piston 20 comportant une structure comprenant essentiellement une partie de moyeu 22, et une partie tubulaire arrière 24 qui coopère à coulissement étanche, sur sa périphérie, avec un ensemble de guidage et d'étanchéité 26 monté dans une portion centrale tubulaire arrière du couvercle arrière 10. Le moyeu est formé avec une gorge périphérique 29 recevant un bourrelet 19 constituant le bord périphérique intérieur de la membrane 18.

Le moyeu 22 comporte un alésage central 30 dans lequel coulisse un plongeur de valve 32 dans lequel est montée rotulante une tige de commande 34 du servomoteur, destiné à être reliée à une pédale de freinage (non représentée).

L'extrémité arrière du plongeur 32 forme un premier siège de clapet 32a concentrique à un second siège de clapet 22a formé sur le moyeu 22, ces deux sièges de clapet étant destinés à coopérer avec un élément de clapet 36 sollicité élastiquement dans la direction des sièges de clapet.

Le fonctionnement du servomoteur est classique et ne sera rappelé que pour mémoire. Lors de l'actionnement de la tige de commande 34 par la pédale de frein, le plongeur 32 est sollicité vers l'avant et ouvre le passage 32a-36, faisant ainsi pénétrer de l'air à la pression atmosphérique dans la chambre arrière 14, par l'intermédiaire d'un passage radial 38 dans le moyeu, la chambre avant 12 étant en permanence en communication avec une source de dépression.

Une différentielle de pression s'établit donc entre les deux faces de la membrane 18, donnant naissance à une force d'assistance transmise par la jupe 16 au moyeu 22 du piston. Ce dernier est en appui par sa face avant annulaire 22b sur la face arrière d'un disque de réaction 40, qui transmet les forces d'entrée et d'assistance à une tige de poussée 42 actionnant le piston d'un maître cylindre (non représenté).

On voit donc que la force d'assistance crée par le servomoteur est intégralement transmise par le moyeu 22 du piston, la partie tubulaire arrière 24 n'intervenant que pour le guidage du piston dans la partie arrière 28 du couvercle 10.

Conformément à la présente invention, il est prévu de réaliser le moyeu du piston et la partie tubulaire arrière du piston en deux pièces distinctes, et de les rapporter l'une sur l'autre.

Comme on l'a représenté sur la moitié supérieure de la Figure unique, le moyeu 22' du piston comporte une partie avant supportant la jupe 16 et la membrane 18, et une partie arrière sur laquelle est formé le siège de clapet 22a.

Sur le moyeu 22' est rapportée la partie arrière tubulaire 24' du piston, dont la partie arrière coulisse de façon étanche dans l'ensemble de guidage 26, et dont la partie avant 44 comporte des moyens de fixation au moyeu 22' du piston.

Dans l'exemple représenté, ces moyens de fixation consistent en un encliquetage. L'extrémité avant 46 de la partie tubulaire 24' est de forme générale cylindrique et comporte à l'avant un bourrelet intérieur 48 dirigé radialement vers l'intérieur, pénétrant dans une gorge périphérique 50 formée sur le moyeu 22'. Des fentes axiales régulièrement réparties radialement dans l'extrémité avant 46 peuvent être pratiquées, de façon à en augmenter l'élasticité et à permettre son encliquetage ou son emboîtement sur le moyeu 22' par un mouvement axial. La partie tournée vers l'avant du bourrelet 48 pourra avantageusement être biseautée pour adopter une forme tronconique concave facilitant l'introduction de la partie tubulaire 24' sur le moyeu 22'.

De façon avantageuse, un joint d'étanchéité 52 sera disposé entre la partie tubulaire arrière 24' et le moyeu 22', pour parfaire l'étanchéité entre les chambres avant 12 et arrière 14 du servomoteur.

De façon également avantageuse, on pourra prévoir que la gorge 50, recevant le bourrelet 48 de la partie tubulaire 24', soit située au voisinage de la gorge 29, recevant le bourrelet 19 de la membrane 18. De la sorte, après assemblage de la partie tubulaire 24' sur le moyeu 22', le bourrelet 19 de la membrane vient en appui radial sur l'extrémité avant 46 de la partie tubulaire arrière 24', pour confirmer son maintien sur le moyeu 22.

On voit donc bien qu'on a réalisé conformément à l'objet de l'invention, un servomoteur dans lequel le piston comporte un moyeu 22' de forme et de volume réduits, associé à une partie tubulaire arrière 24', ces éléments pouvant être facilement interchangés pour des opérations d'entretien du servomoteur, pour modifier les caractéristiques du servomoteur, ou pour disposer des moyens de valve plus élaborés.

D'autre part, la partie tubulaire arrière et le moyeu pourront être constitués de matériaux différents, le moyeu en un matériau choisi pour une bonne aptitude à transmettre la force de la jupe de piston au disque de réaction, et la partie tubulaire arrière en un matériau choisi pour sa bonne aptitude au coulissement et à l'étanchéité avec l'ensemble 26.

## Revendications

1. Servomoteur pneumatique d'assistance au freinage comportant une enveloppe (10) à l'intérieur de laquelle se trouve un piston comportant un moyeu (22, 22') prolongé vers l'arrière par une partie tubulaire (24, 24') traversant de façon étanche l'enveloppe (10) et supportant une jupe (16) et qui comporte une gorge annulaire (29) recevant un bourrelet périphérique (19) intérieur d'une membrane déroulante (18) qui définit une chambre avant (12) reliée en permanence à une source de dépression et une chambre arrière (14) reliée sélectivement à la chambre avant (12) ou à l'atmosphère par un moyen de valve (22a, 32a, 36) actionné par une tige de commande (34) susceptible de s'appuyer, par l'intermédiaire de la face avant d'un plongeur (32), sur une première face d'un disque de réaction (40) solidaire par une deuxième face d'une tige de poussée (42), caractérisé en ce que la partie tubulaire arrière (24') du piston est rapportée sur le moyeu (22') du piston par encliquetage (48, 50).

2. Servomoteur selon la revendication 1, caractérisé en ce que la partie tubulaire arrière (24') comporte une extrémité avant (46) munie d'un bourrelet (48) pénétrant dans une gorge périphérique (50) formée sur le moyeu (22').

3. Servomoteur selon la revendication 2, caractérisé en ce que des fentes axiales régulièrement réparties radialement sont pratiquées dans l'extrémité avant (46) de la partie tubulaire arrière (24').

4. Servomoteur selon la revendication 3, caractérisé en ce que la gorge périphérique (50) recevant l'extrémité avant (46) de la partie tubulaire arrière (24') est formée au voisinage de la gorge annulaire (29) recevant le bourrelet (19) de la membrane déroulante.

5. Servomoteur selon la revendication 4 caractérisé en ce que le bourrelet périphérique intérieur (19) de la membrane déroulante (18) vient en appui radial sur l'extrémité avant (46) de la partie tubulaire arrière (24').

6. Servomoteur selon l'une quelconque des revendications précédentes, caractérisé en ce qu'un joint d'étanchéité (52) est disposé entre la partie tubulaire arrière (24') et le moyeu (22').

7. Servomoteur selon l'une quelconque des revendications précédentes, caractérisé en ce que la partie tubulaire arrière (24') du piston et le moyeu (22') de piston sont constitués de matériaux différents.

## Claims

1. Pneumatic brake booster including a casing (10) inside which there is a piston including a hub (22, 22') extended backwards by a tubular part (24, 24') passing in a sealed fashion through the casing (10) and supporting a skirt (16) and which includes an annular groove (29) receiving an internal peripheral bead (19) of a rolling seal (18) which defines a front chamber (12) permanently connected to a source of depression and a back chamber (14) selectively connected to the front chamber (12) or to the atmosphere by a valve means (22a, 32a, 36) actuated by a control rod (34) capable of pressing, by means of the front face of a plunger (32), on a first face of a reaction disk (40) secured by a second face to a push rod (42), characterized in that the back tubular part (24') of the piston is connected to the hub (22') of the piston by clipping (48, 50).

2. Booster according to claim 1, characterized in that the back tubular part (24') includes a front end (46) provided with a bead (48) penetrating into a peripheral groove (50) formed on the hub (22').

3. Booster according to claim 2, characterized in that radially evenly distributed axial slits are made in the front end (46) of the back tubular part (24').

4. Booster according to claim 3, characterized in that the peripheral groove (50) receiving the front end (46) of the back tubular part (24') is formed close to the annular groove (29) receiving the bead (19) of the rolling seal.

5. Booster according to claim 4, characterized in that the internal peripheral bead (19) of the rolling seal (18) comes to bear radially on the front end (46) of the back tubular part (24').

6. Booster according to any one of the preceding claims, characterized in that a seal (52) is arranged between the back tubular part (24') and the hub (22').

7. Booster according to any one of the preceding claims, characterized in that the back tubular part (24') of the piston and the piston hub (22') consist of different materials.

## Patentansprüche

1. Pneumatischer Bremsunterstützungs-Servomotor mit einem Gehäuse (10), in dessen Innerem sich ein Kolben befindet, der eine Nabe (22, 22') aufweist, die nach hinten durch einen rohrförmigen Abschnitt (24, 24') verlängert ist, der in dichter Weise das Gehäuse (10) durchquert, und die eine Schürze (16) trägt und eine Umfangsnut (29) aufweist, die einen Innenumfangswulst (19) einer Abrollmembran (18) aufnimmt, die eine permanent mit einer Unterdruckquelle verbundene vordere Kammer (12) und eine hintere Kammer (14) bildet, die selektiv mit der vorderen Kammer (12) oder mit der Atmosphäre durch ein Ventilmittel (22a, 32a, 36) verbunden ist, das von einer Steuerstange (34) betätigt wird, die sich über die vordere Fläche eines Tauchkolbens (32) an einer ersten Fläche einer Reaktionsscheibe (40) abstützen kann, die über eine zweite Fläche fest mit einer Schubstange (42) verbunden ist, dadurch gekennzeichnet, daß der rohrförmige hintere Abschnitt (24') des Kolbens an der Nabe (22') des Kolbens durch Einrasten (48, 50) befestigt ist.

2. Servomotor nach Anspruch 1, dadurch gekennzeichnet, daß der rohrförmige hintere Abschnitt (24') ein vorderes Ende (46) aufweist, das mit einem Wulst (48) versehen ist, der in eine an der Nabe (22') gebildet Umfangsnut (50) eindringt.

3. Servomotor nach Anspruch 2, dadurch gekennzeichnet, daß in dem vorderen Ende (46) des rohrförmigen hinteren Abschnittes (24') radial gleichmäßig verteilte axiale Schlitze gebildet sind.

4. Servomotor nach Anspruch 3, dadurch gekennzeichnet, daß die das vordere Ende (46) des rohrförmigen hinteren Abschnittes (24') aufnehmende Umfangsnut (50) in der Nähe der ringförmigen Nut (29) gebildet ist, die den Wulst (19) der Abrollmembran aufnimmt.

5. Servomotor nach Anspruch 4, dadurch gekennzeichnet, daß der Innenumfangswulst (19) der Abrollmembran (18) radial an dem vorderen Ende (46) des rohrförmigen hinteren Abschnittes (24') in Anlage gelangt.

6. Servomotor nach einem der vorhergehenden Ansprüche, dadurch gekennzeichnet, daß zwischen dem rohrförmigen hinteren Abschnitt (24') und der Nabe (22') eine Dichtung (52) angeordnet ist.

7. Servomotor nach einem der vorhergehenden Ansprüche, dadurch gekennzeichnet, daß der rohrförmige hintere Abschnitt (24') des Kolbens und die Nabe (22') des Kolbens aus unterschiedlichen Materialien bestehen.
